# EUROPÄISCHE PATENTSCHRIFT

(11) **EP 0 391 032 B1**
(45) Veröffentlichungstag und Bekanntmachung des Hinweises auf die Patenterteilung: **26.11.1997**
(21) Anmeldenummer: 90102059.4
(22) Anmeldetag: 02.02.1990
(51) Int. Cl.: H04N 9/29

(54) **Entmagnetisierungsschaltung für die Bildröhre in Videoanzeigegeräten**
Degaussing circuit for a picture tube in a video display apparatus
Circuit de désaimantation d'un tube image dans un dispositif d'affichage vidéo

(30) Priorität: 07.04.1989 DE 3911313
(43) Veröffentlichungstag der Anmeldung: 10.10.1990
(73) Patentinhaber: GRUNDIG Aktiengesellschaft, 90762 Fürth (DE)
(72) Erfinder: Schaab, Rainer, GRUNDIG E.M.V., Kurgartenstrasse 37, D-8510 Fürth/Bay (DE); Zipser, Otfried, GRUNDIG E.M.V., Kurgartenstrasse 37, D-8510 Fürth/Bay (DE)

(56) Entgegenhaltungen:
- EP-A- 219 287
- EP-A- 0 144 531
- WO-A-84/01486

## Beschreibung

Die Erfindung betrifft eine Entmagnetisierungsschaltung für Videoanzeigegeräte, insbesondere Farbfernsehgeräte, die über eine Mikroprozessorsteuerung verfügen.

Trotz sorgfältiger Konvergenzeinstellung der Farbbildröhren kann durch das Erdmagnetfeld oder andere äußere Felder, welche auf die Lochmaske oder die magnetische Abschirmung einwirken, und so die Auftreffpunkte der Elektronenstrahlen verändern, die Bildqualität verschlechtert werden. Aus diesem Grund wird bei Videoanzeigegeräten üblicherweise eine Entmagnetisierungsschaltung vorgesehen, welche zu vorbestimmten Zeitpunkten, insbesondere bei Betätigen des Netzschalters, in Betrieb gesetzt wird.

Bei Farbfernsehgeräten ist es üblich, die Entmagnetisierungsschaltung beim Einschalten des Gerätes zu aktivieren. Hier wird bei Betätigung des Netzschalters die Entmagnetisierungsspule über einen PTC-Widerstand mit dem Netz verbunden. Wenn der PTC-Widerstand mit Strom durchflossen wird, erhöht sich sein Widerstandswert und der Stromfluß geht gegen Null, wie es für die Entmagnetisierung erforderlich ist. Nachteile dieser Schaltung sind der ständige Leistungsbedarf des PTC-Widerstandes infolge des Reststromes und die aufwendige Schutz-Isolierung der Entmagnetisierungsspule, die durch die netzseitige Speisung notwendig ist. Weiterhin ist der Einschaltzeitpunkt auf die Inbetriebnahme des Gerätes festgelegt.

Bei Geräten mit Fernbedienung ist es notwendig, eine Entmagnetisierung auch sicherzustellen, wenn vom Bereitschaftsbetrieb in den Normalbetrieb geschaltet wird. Bei portablen Fernsehgeräten muß die Entmagnetisierung infolge Ortsveränderung unter Umständen (z. B. Fernsehgerät im Auto) auch während des Betriebs erfolgen.

Aus diesem Grund wird häufig die Entmagnetisierungsspule in Reihe zu einem Kondensator geschaltet, wobei dieser über einen Ladewiderstand mit einer hohen Betriebsspannung im Gerät verbunden ist, wie es in der EP-A- 0 144 531 beschrieben ist. Der Kondensator, der Ladewiderstand und die Entmagnetisierungsspule bilden einen stark gedämpften Schwingkreis, der mit einem Schalter geschlossen werden kann und so die Entmagnetisierung auslöst. Diese Anordnung ist für Standgeräte einsetzbar, wenn der Schalter durch den Netzschalter realisiert ist und ebenso für portable Geräte, wenn der Schalter als elektonischer Schalter ausgebildet ist, der sein Schaltsignal z. B. aus einer Stummschaltung bei Programmwechsel oder aus der vertikalen Austastlücke erzeugt, wie es in der EP-A- 0 144 531 beschrieben ist. Bei der Schaltsignalerzeugung in der Austastlücke besteht der Nachteil des relativ großen und damit teuren Schaltungsaufwandes. Im anderen Fall besteht das Problem, daß nicht jedes Videoanzeigegerät über eine Stummschaltung verfügt. So ist sie sowohl bei einigen Fernsehgeräten, als auch in Datenmonitoren nicht vorgesehen.

Aus der internationalen Patentanmeldung WO-A-8401486 ist eine Anzeigeeinheit mit einer Kathodenstrahlröhre bekannt, bei der die Entmagnetisierung mikroprozessorgesteuert zu festgelegten Zeitpunkten, insbesondere nach einem manuellen Rücksetzen oder bei Einschalten der Stromversorgung, gestartet wird, wobei während der Dauer der Entmagnetisierung die Anzeigeeiheit abgedunkelt wird.

Aufgabe der Erfindung ist es, eine Entmagnetisierungsschaltung anzugeben, die möglichst universell einsetzbar ist und dabei einen geringen Schaltungsaufwand erfordert.

Diese Aufgabe wird ausgehend von den Merkmalen des Oberbegriffes des Anspruches 1 durch die kennzeichnenden Merkmale des Anspruches 1 gelöst. Vorteilhafte Ausgestaltungen der Erfindung sind in den abhängigen Ansprüchen angegeben.

Gemäß der Erfindung werden die Zeitpunkte, zu denen eine Entmagnetisierung stattfinden soll, von einem ohnehin vorhandenen Mikrocomputer nach einem Softwareprogramm festgelegt. Dieses Softwareprogramm ist leicht änderbar und erfordert keine Veränderungen in der Schaltungsanordnung wenn man die Entmagnetisierungszeitpunkte an die verschiedenen Gerätetypen anpassen möchte. Weiterhin ist man in der Wahl der Entmagnetisierungszeitpunkte unabhängig von vorhandenen Signalen, die zwar als Schaltsignale dienen können, deren Vorhandensein aber abhängig ist von der Art und Ausstattung des Videoanzeigegerätes. Beim Benutzen der Signale nach der Erfindung wird der Entmagnetisierungszeitpunkt auch nicht auf den Zeitpunkt des Auftretens des auslösenden Signals festgelegt, sondern es kann z.B. verzögert entmagnetisiert werden, ohne daß es einen zusätzlichen Schaltungsaufwand erfordert.

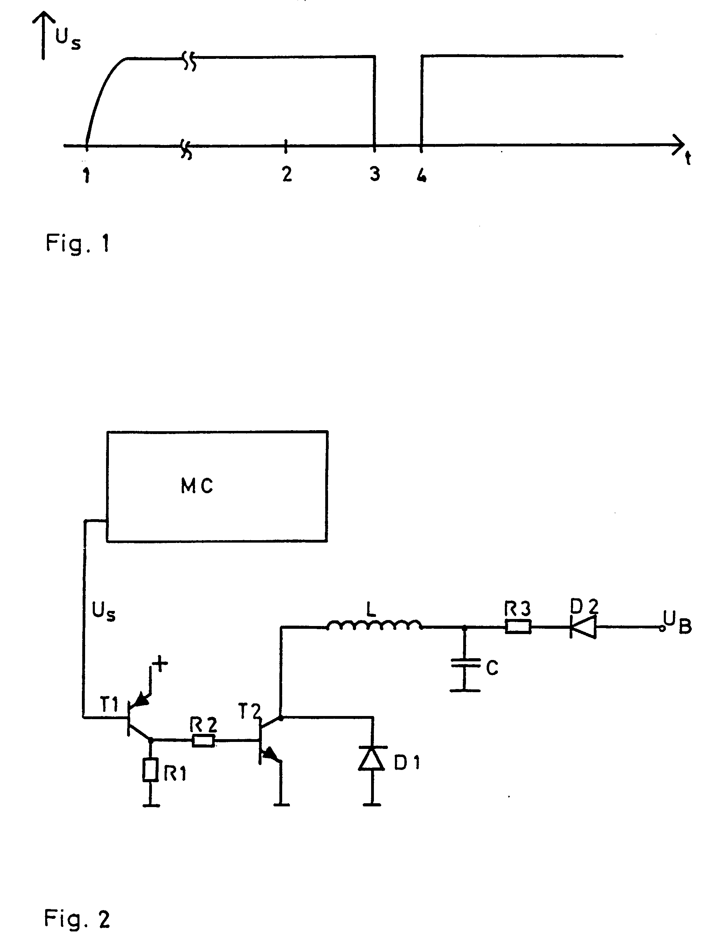

Fig. 1 zeigt eine günstige Veränderung des Entmagnetisierungszeitpunktes beim Einschalten eines Fernsehgerätes aus dem Bereitschaftsbetrieb. In Figur 1 ist das Schaltsignal, welches vom Mikrocomputer ausgegeben wird, über der Zeitachse dargestellt. Zum Zeitpunkt (1) wird das Gerät mit der Netztaste in den Bereitschaftsbetrieb geschaltet. Zum Zeitpunkt (2) wird vom Bereitschaftsbetrieb in Normalbetrieb umgeschaltet. Gleichzeitig wird üblicherweise die Entmagnetisierung gestartet. Mit der erfindungsgemäßen Ansteuerung wird dieser Zeitpunkt noch verzögert, bis sich alle Felder um die magnetischen Komponenten des Gerätes aufgebaut haben und somit Störungen, die durch diese Felder entstehen können, vermieden werden. Zum Zeitpunkt (3) wird dann die Entmagnetisierung gestartet und ab (4) findet der Normalbetrieb statt. Die Zeit, die für den Hochlauf vom Bereitschaft- in Normalbetrieb, d.h. die Zeit zwischen (2) und (3), beträgt ungefähr 2 sec, danach wird für etwa 10 msec die Entmagnetisierungsschaltung aktiviert, wobei die Entmagnetisierungszeit nur etwa 2 msec dauert. Diese Zeitwerte sind abhängig von den verwendeten Bauteilen und der Dimensionierung der Bauelemente.

Eine Erweiterung der Anwendungsmöglichkeiten ergibt sich auch durch die Einbeziehung und Auswertung von Befehlen, die über die Fernbedienung eingegeben werden und im Mikroprozessor verarbeitet werden. So kann z. B. bei Geräten, die auf einem Standfuß drehbar gelagert sind, wobei durch Fernbedienung eine Drehung ausgelöst wird, bei Abschluß der Drehung eine Entmagnetisierung gestartet werden.

In Fig. 2 ist ein Ausführungsbeispiel der erfindungsgemäßen Schaltungsanordnung angegeben.

Der Mikroprozessor MC ist mit der Basis des Transisistors T 1 verbunden. Der Emitter dieses Transistors liegt an einer positiven Spannung und der Kollektor des Transistors T 1 ist über einen Widerstand R 1 mit Masse verbunden und über einen Widerstand R 2 mit der Basis des Transistors T 2. Der Emitter des Transistors T 2 geht an Masse, der Kollektor ist über die Diode D 1 mit Masse verbunden, wobei die Kathode mit dem Kollektor verbunden ist. Weiterhin führt eine Leitung vom Kollektor des Transistors T 2 an die Entmagnetisierungsspule L. Diese ist mit einem Kondensator C, der an Masse geht, und mit dem Widerstand R 3 verbunden. Vom Widerstand R 3 führt eine Leitung zur Kathode der Diode D 2, deren Anode mit einer für die Entmagnetisierung geeigneten Spannung U_{B} verbunden ist. Die Spannung U_{B} wird auf der Sekundärseite des Stromversorgungstransformators abgegriffen.

Wenn der Schalttransistor T 2 sperrt, wird der Kondensator C über den Ladewiderstand R 3 aufgeladen. Die Diode D 2 richtet die Wechselspannung U_{B} gleich. Wenn der Transistor T 2 leitend wird, bilden die Entmagnetisierungsspule L und der Kondensator C einen gedämpften Schwingkreis. Für seine Funktion ist noch die Diode D 1 notwendig, die die entgegengesetzte Durchlaßrichtung zum Transistor T 2 hat, so daß positive und negative Halbwellen durchgelassen werden. Durch den gedämpften Schwingkreis wird der zur Entmagnetisierung benötigte, abklingende Wechselstrom für die Entmagnetisierungsspule L gewonnen.

Die Ansteuerung des Schalttransistors T 2 erfolgt durch den Mikroprozessor MC. In ihm werden eingehende Signale verarbeitet und daraus Schaltsignale für die Entmagnetisierung berechnet. So können die Entmagnetisierungszeitpunkte leicht festgelegt werden, z.B. beim Drücken der Netztaste, bei Umschaltung von Bereitschaftsbetrieb in Normalbetrieb, bei Programmwechsel usw.

Wenn der Mikrocomputer einen Schaltzeitpunkt errechnet hat, gibt er ein Schaltsignal U_{S} aus, wobei zunächst durch den als Inverter geschalteten Transistor T 1 der Pegel invertiert wird, damit dann der Schalttransistor T 2 über den Widerstand R 2 richtig angesteuert werden kann.

## Patentansprüche

1. Entmagnetisierungsschaltung für die Bildröhre von Videoanzeigegeräten, insbesondere für Farbfernsehgeräte, die über eine Mikroprozessorsteuerung (MC) verfügen, wobei die Mikroprozessorsteuerung (MC) mit der Entmagnetisierungsschaltung (L, C, R3, D2) verbunden ist und die Entmagnetisierungsspule (L) aus der Sekundärseite des Stromversorgungstransformators gespeist wird,
**dadurch gekennzeichnet, daß**
- der Mikroprozessor (MC) so ausgeführt ist, daß er die im Videoanzeigegerät vorhandenen Schaltsignale, die beim Drücken der Netztaste und/oder bei Umschaltung von Bereitschaftsbetrieb in Normalbetrieb und/oder bei Programmwechsel und/oder bei Befehl für die Drehung des Videoanzeigegerätes auftreten, auswertet und daraus die Entmagnetisierungszeitpunkte berechnet und ein Schaltsignal für die Entmagnetisierungsschaltung ausgibt,
- und daß nach dem Einschalten des Videoanzeigegerätes die Entmagnetisierungszeitpunkte so vorgegeben werden, daß eine Entmagnetisierung erst erfolgen kann, wenn die Felder um die magnetischen Komponenten des Gerätes ausgebildet sind.

2. Entmagnetisierungsschaltung nach Anspruch 1,
**dadurch gekennzeichnet, daß**
das Schaltsignal des Mikroprozessors (MC) ein Halbleiterschaltelement (Tl) ansteuert, das seinerseits die Entmagnetisierung aktiviert.

3. Entmagnetisierungsschaltung nach Anspruch 1 oder 2,
**dadurch gekennzeichnet, daß**
das vom Mikroprozessor (MC) ausgegebene Schaltsignal zur weiteren Verarbeitung invertiert wird.

## Claims

1. Demagnetization circuit for the picture tubes of video display units, in particular for colour television sets, which have a microprocessor control system (MC), the microprocessor control system (MC) being connected to the demagnetization circuit (L, C, R3, D2) and the demagnetization coil (L) being supplied from the secondary side of the power supply transformer, characterized in that
- the microprocessor (MC) is designed so that it evaluates the switching signals which are present in the video display unit and which occur on pressing the mains key and/or on switching over from standby to normal operation and/or on changing channel and/or on a command for rotating the video display unit and calculates therefrom the demagnetization times and emits a switching signal for the demagnetization circuit
- and in that, after the video display unit has been switched on, the demagnetization times are set so that a demagnetization can take place only if the fields around the magnetic components of the unit have been formed.

2. Demagnetization circuit according to Claim 1,
characterized in that the switching signal of the microprocessor (MC) triggers a semiconductor switching element (T1) which in turn activates the demagnetization.

3. Demagnetization circuit according to Claim 1 or 2,
characterized in that the switching signal emitted by the microprocessor (MC) is inverted for the purpose of further processing.

## Revendications

1. Circuit de désaimantation pour le tube image d'appareils d'affichage vidéo, notamment pour des appareils de télévision en couleurs, qui disposent d'une commande à microprocesseur (MC), et dans lequel la commande à microprocesseur (MC) est reliée au circuit de désaimantation (L,C,R3,D2), et la bobine de désaimantation (L) est alimentée à partir du côté secondaire du transformateur d'alimentation en courant,
caractérisé en ce que
- le microprocesseur (MC) est agencé de telle sorte qu'il exploite les signaux de commutation, qui sont présents dans l'appareil d'affichage vidéo et qui apparaissent lors de l'enfoncement de la touche de raccordement du réseau et/ou dans le cas de la commutation depuis le fonctionnement d'attente au fonctionnement normal et/ou dans le cas d'un changement de programme et/ou dans le cas d'une instruction servant à faire tourner l'appareil d'affichage vidéo, et calcule, à partir de là, les instants de désaimantation et délivre un signal de commutation pour le circuit de désaimantation, et
- qu'après le branchement de l'appareil d'affichage vidéo, les instants de désaimantation sont prédéterminés de telle sorte qu'une désaimantation ne peut se produire que lorsque les champs sont formés autour des composants magnétiques de l'appareil.

2. Circuit de désaimantation suivant la revendication 1, caractérisé en ce que
le signal de commutation du microprocesseur (MC) commande un élément de commutation à semiconducteurs (T1), qui pour sa part déclenche la désaimantation.

3. Circuit de désaimantation suivant la revendication 1 ou 2, caractérisé en ce que
le signal de commutation délivré par le microprocesseur (MC) est inversé pour la poursuite du traitement.
